# EUROPEAN PATENT SPECIFICATION

(11) **EP 3 540 483 B1**
(45) Date of publication and mention of the grant of the patent: **13.12.2023**
(21) Application number: 17913684.1
(22) Date of filing: 17.11.2017
(51) Int. Cl.: G02B 6/02

(54) **MANUFACTURING METHOD OF OPTIC FIBER GRATING**
VERFAHREN ZUR HERSTELLUNG EINES OPTISCHEN FASERGITTERS
MÉTHODE DE FABRICATION D'UN RÉSEAU DE FIBRES OPTIQUES

(30) Priority: 13.06.2017 CN 201710443210
(43) Date of publication of application: 18.09.2019
(73) Proprietor: Fiberhome Telecommunication Technologies Co., Ltd, Wuhan, Hubei 430000 (CN)
(72) Inventor: HE, Yan, Wuhan Hubei 430000 (CN); XING, Fengyu, Wuhan Hubei 430000 (CN); HU, Guohua, Wuhan Hubei 430000 (CN)
(74) Representative: Oberdorfer, Jürgen
(86) International application number: PCT/CN2017/111565
(87) International publication number: WO 2018/227876

(56) References cited:
- EP-B1- 0 902 308
- WO-A2-01/46723
- CN-A- 1 210 985
- CN-A- 1 413 310
- CN-A- 103 543 490
- CN-A- 105 021 308
- CN-A- 107 085 262
- GB-A- 2 188 719
- US-A- 3 993 485
- US-A- 6 087 655
- US-A1- 2003 107 786
- US-A1- 2016 305 771

## Description

### Technical Field

The present invention relates to the field of optical fibre grating manufacturing, and specifically to a manufacturing method of an optical fibre grating.

### Background

An optical fibre grating is a passive filter optical device formed by periodically axially modulating the refractive index of an optical fibre core.

In the prior art, an optical fibre grating is made of a photosensitive polarization-maintaining optical fibre; an incident light coherent field pattern is written into a fibre core by ultraviolet light exposure; in the fibre core, the refractive index of the fibre core periodically changes along the axial direction to form a permanent space phase grating, thereby reflecting or transmitting light waves with a specific wavelength; light waves with the remaining wavelengths are not affected, but are continuously transmitted along the fibre grating.

However, the manufacturing method of the above optical fibre grating not only has high cost due to the use of an expensive writing device, but also has low yield.

GB2188719A discloses an optical fibre, the optical fibre includes a structure, for example as part of the fibre core structure or of a coating thereon, such that the deformation of the core structure (bending or pinching) required for optical power coupling between modes can be achieved simply by producing changes in the pressure pertaining across the fibre transversely to its length, such as by squeezing the fibre between two smooth surfaces or changing the fibre tension. The structure may include means extending helically or in a snake-like manner with respect to the length of the fibre. A helically extending means may be comprised by a helical rib of the coating.

US20160305771A1 discloses a low-cost fiber optic sensor for lager strains. A fiber grating device of low cost and arbitrary length is formed on a portion of a portion or the entirety of a highly elastic fiber optic core having a low Young's modulus of elasticity by causing elongation of the fiber optic core and forming or depositing a hard skin or cladding on the elongated fiber optic core. When the stress is then released, the hard skin or cladding buckles (including elastic or plastic deformation or both) to form wrinkles at the interface of the fiber optic core and the hard skin or cladding which are oriented circumferentially and highly uniform in height and spacing which can be varied at will by choice of materials, stretching, and thickness and composition of the cladding. Since the elastic elongation of the fiber optic core portion may be 200% or greater, an unprecedented measurement range is provided.

US6087655A disclose fiber grating encoders and methods for fabricating the same. Very long linear large diameter rotational, and arbitrary shape conformal fiber encoders are suggested. These devices are based on detection of non-zeroth diffraction order or interference pattern of selected diffraction orders from the fiber grating. Relative and absolute position detection or movement detection can be realized. Depending on the variety of disclosed configurations of fiber encoders, fiber grating could be either a fiber Bragg grating (refractive index modulation grating), a fiber surface-relief phase grating, or fiber amplitude or amplitude phase grating. Each of these fiber gratings may have a uniform or chirped period, and the fiber grating encoders may be implemented using transmission, reflection, or Bragg angle reflection schemes. An optical fiber may be manufactured on a continuous basis by drawing it from preform. Consequently, there is really no limitation to the length of the linear fiber based encoders. In addition, since fiber grating can be mounted on a circularly symmetric figure of arbitrary diameter, there is therefore no limitation on the manufacturable size of a rotary encoder. Due to flexibility of fibers, the proposed gratings can be mounted on a surface of arbitrary shape, thereby enabling optical motion encoders to be fabricated for conformal surfaces. Some manufacturing techniques are disclosed.

CN1210985A discloses an optical fiber grating and manufacturing method therefor. It refers to the field of optical elements, systems, or apparatus. The optical fiber grating is manufactured by heating intermittently an optical fiber, provided with a core having residual stress in the longitudinal direction, softening a peripheral cladding of the core, and forming spatial periodical changes for the relative refractive index-difference between the core and the cladding, in the longitudinal direction of the aforementioned optical fiber by having the index of refraction of the core change, through the releasing of the aforementioned residual stress. As a result, an optical fiber grating and the manufacturing method thereof, which do not require expensive equipment and which exhibit high productivity, and furthermore a grating characteristic which is stable over time can be provided.

CN1413310A discloses a method for altering refractive index of optical fibers using stress. It refers to the field of optical elements, systems, or apparatus. The optical fiber is stressed along its axis with a strain of at least 1% while light is introduced transversely to write a grating. The strain increases the photosensitivity of the fiber and reduces the time required to write the grating. Alternatively, the fiber can be compressed radially and inwardly, or compressed along its axis.

US3993485A relates to a photopolymerization process adapted for the production of various optical devices by means of a modified process which serves to increase the index change obtainable in a variable pattern of index of refraction. The process comprises the steps of flowing into place in a supporting structure a mixture of two components of differing reactivity and polarizability, partially polymerizing the mixture, writing a pattern of varying index of refraction in the partially polymerized mixture by further polymerizing it by suitable optical radiation in a corresponding pattern, and fixing the mixture against subsequent changes in polymerization. Typical components used in the process include a mixture of the monomers cyclohexyl methacrylate and N-vinylcarbazole together with benzoin methyl ether as a photosensitive initiator of polymerization, which proceeds by free radical reactions. In the limit of our technique, one of the components can have zero reactivity. This photopolymerization process is applicable to production of volume gratings in closed cavities having parts with constricted clearances therebetween, in which application it is impossible to evaporate unreacted components after the mixture has been flowed into place. The volume gratings are useful in distributed feedback lasers, in frequency sensitive optical filters and in channel-dropping arrangements for optical communication systems. Submerging the apparatus in which polymerization is to occur in an index-matching fluid between flat glass plates is an aid to producing uniform volume gratings in a cylindrical device.

### Summary

In view of the defects existing in the prior art, the present invention aims to provide a manufacturing method an optical fibre grating, which features simple production process, low cost and high production efficiency.

To realize the above purpose, the present invention provides manufacturing methods of an optical fibre grating as defined by independent claims 1 and 3.

Based on the above technical solution, the hard embedding bodies are arranged at intervals in a uniform manner along the axis direction of the optical fibre core.

Compared with the prior art, the present invention has the following advantages:
(1) in the present invention, the density of the optical fibre core changes in an alternate manner along the axial direction; as the refractive index of the optical fibre core is positively correlated with the density, the refractive index of the optical fibre core changes in the axial direction to form the optical fibre grating; the density of the optical fibre core is periodically changed through a physical method; the production process is simple, the cost is low, and the production efficiency is high;
(2) in the present invention, the optical fibre grating is provided with a plurality of hard embedding bodies that are arranged at intervals; the density of the optical fibre core of the part wrapped by the hard embedding bodies is higher than the density of the optical fibre core of the other part which is not wrapped by the hard embedding bodies, so that the density of the optical fibre core changes in an alternate manner along the axial direction; the production process is simple, and the cost is low; and
(3) in the present invention, a plurality of hard embedding bodies are arranged at intervals in a uniform manner; thus, the refractive index of the optical fibre core periodically changes, and the filtering property of the optical fibre grating is improved.

### Brief Description of the Drawings

FIG. 1 is a structural sectional view of an optical fibre grating according to Embodiment 1 manufactured according to the method of the present invention;
FIG. 2 is a structural schematic diagram of an annular hard embedding body according to Embodiment 1 manufactured according to the method of the present invention;
FIG. 3 is a structural schematic diagram of a semi-annular hard embedding body according to Embodiment 1 manufactured according to the method of the present invention; and
FIG. 4 is a structural sectional view of an optical fibre grating according to Embodiment 2 manufactured according to the method of the present invention.
Figure legends: 1-optical fibre core; 2-optical fibre coating; 3-optical fibre colouring layer; 4-hard embedding body.

### Detailed Description of the Embodiments

The present invention is further described below with reference to the drawings and embodiments in detail.

### Embodiment 1:

The embodiment of the present invention provides an optical fibre grating, comprising an optical fibre core 1; the density of the optical fibre core 1 changes in an alternate manner along the axial direction of the optical fibre core 1; the optical fibre core 1 comprises a plurality of high-density segments and a plurality of low-density segments; the high-density segments and the low-density segments are arranged in an alternate manner along the axial direction of the optical fibre core 1.

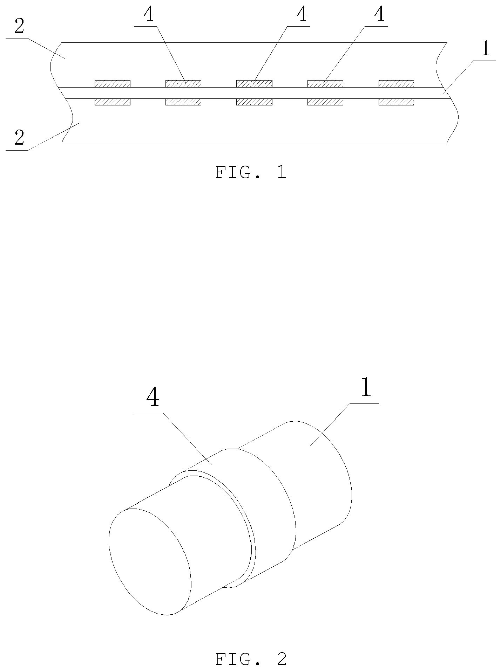

Referring to FIG. 1, the optical fibre grating comprises the optical fibre core 1 and an optical fibre coating 2 in sequence from the inside to the outside; a plurality of hard embedding bodies 4 are arranged between the optical fibre core 1 and the optical fibre coating 2; the optical fibre core 1 is wrapped by the hard embedding bodies 4 in an annular manner; the plurality of hard embedding bodies 4 are arranged at intervals along the axis direction of the optical fibre core 1; the density of the optical fibre core 1 of the part wrapped by the hard embedding bodies 4 is higher than the density of the optical fibre core 1 of the other part which is not wrapped by the hard embedding bodies 4. As the hard embedding bodies 4 are arranged at intervals in a uniform manner along the axis direction of the optical fibre core 1, the refractive index of the optical fibre core 1 periodically changes, and the filtering property of the optical fibre grating is improved.

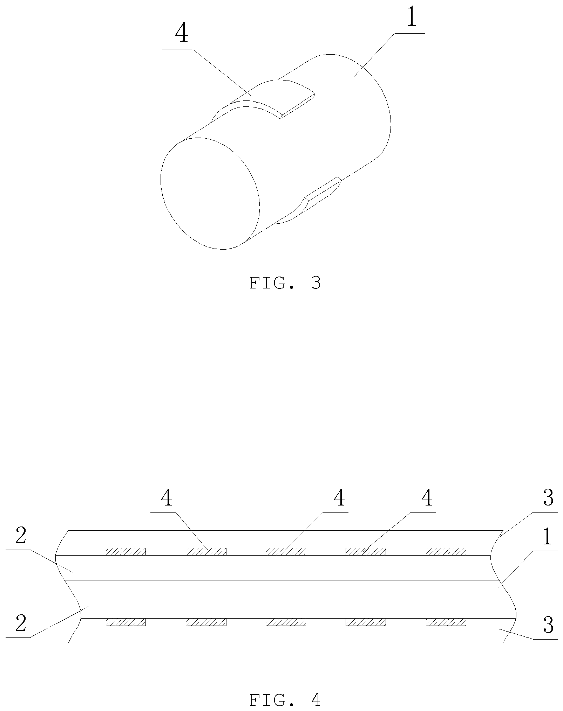

Referring to FIG. 2, the hard embedding bodies 4 are annular. Referring to FIG. 3, the hard embedding bodies 4 are semi-annular.

The principles of the present invention are as follows: the density of the optical fibre core 1 changes in an alternate manner along the axial direction; as the refractive index of the optical fibre core 1 is positively correlated with the density, the refractive index of the optical fibre core 1 changes in the axial direction to form the optical fibre grating; the density of the optical fibre core is periodically changed through a physical method; the production process is simple, the cost is low, and the production efficiency is high.

The Embodiment 1 of the present invention provides a manufacturing method of an optical fibre grating, comprising: firstly, an optical fibre core 1 is sprayed with a plurality of annular or semi-annular hard embedding bodies 4 at intervals, and the optical fibre core 1 and the hard embedding bodies 4 are coated with an optical fibre coating 2; and finally, the optical fibre coating 2 is extruded and cured to produce a radial inward extruding force, so that the density of the optical fibre core 1 changes in an alternate manner along the axial direction of the optical fibre core 1.

### Embodiment 2:

Referring to FIG. 4, the Embodiment 2 of the present invention differs from the Embodiment 1 in that: the optical fibre grating comprises an optical fibre core 1, an optical fibre coating 2 and an optical fibre colouring layer 3 in sequence from the inside to the outside; a plurality of hard embedding bodies 4 are arranged between the optical fibre coating 2 and the optical fibre colouring layer 3; the optical fibre coating 2 and the optical fibre core 1 are wrapped by the hard embedding bodies 4 in an annular manner; a plurality of hard embedding bodies 4 are arranged at intervals along the axis direction of the optical fibre core 1; the density of the optical fibre core 1 of the part wrapped by the hard embedding bodies 4 is higher than the density of the optical fibre core 1 of the other part which is not wrapped by the hard embedding bodies 4.

The Embodiment 2 of the present invention provides a manufacturing method of an optical fibre grating, comprising: firstly, an optical fibre core 1 is coated with an optical fibre coating 2, and the optical fibre coating 2 is cured; then, the optical fibre coating 2 is sprayed with a plurality of annular or semi-annular hard embedding bodies 4 at intervals, and the optical fibre coating 2 and the hard embedding bodies 4 are coated with an optical fibre colouring layer 3; and finally, the optical fibre colouring layer 3 is extruded and cured to produce a radial inward extruding force, so that the density of the optical fibre core 1 changes in an alternate manner along the axial direction of the optical fibre core 1.

The hard embedding bodies 4 of the present invention are formed by curing a liquid mixture that is coated; the liquid mixture may be sprayed by a spraying device; then the liquid components of the liquid mixture are cured or volatilized by means of thermal or optical radiation to form the hard embedding bodies 4.

The present invention is not limited to the above embodiments. A person of ordinary skill in the technical field may make improvements and polishing within the scope of appended claims.

## Claims

1. A manufacturing method of an optical fibre grating, comprising: firstly, coating an optical fibre core (1) with an optical fibre coating (2), and curing the optical fibre coating (2); then, spraying the optical fibre coating (2) with a plurality of annular or semi-annular hard embedding bodies (4) at intervals, coating the optical fibre coating (2) and the hard embedding bodies (4) with an optical fibre colouring layer (3); and finally, extruding and curing the optical fibre colouring layer (3) to produce a radial inward extruding force, so that the density of the optical fibre core (1) changes in an alternate manner along the axial direction of the optical fibre core (1);
the density of the optical fibre core (1) of the part wrapped by the hard embedding bodies (4) is higher than the density of the optical fibre core (1) of the other part which is not wrapped by the hard embedding bodies (4);
wherein the optical fibre grating comprises the optical fibre core (1), an optical fibre coating (2) and an optical fibre colouring layer (3) in sequence from inside to outside,
wherein the optical fibre core (1) comprises a plurality of high-density segments and a plurality of low-density segments; the high-density segments and the low-density segments are arranged in an alternate manner along the axial direction of the optical fibre core (1);
the plurality of hard embedding bodies (4) are arranged between the optical fibre coating (2) and the optical fibre colouring layer (3); the optical fibre coating (2) and the optical fibre core (1) are wrapped by the hard embedding bodies (4) in an annular manner; the plurality of hard embedding bodies (4) are arranged at intervals along the axis direction of the optical fibre core (1).

2. The manufacturing method of an optical fiber grafting according to claim 1, wherein the hard embedding bodies (4) are arranged at intervals in a uniform manner along the axis direction of the optical fibre core (1).

3. A manufacturing method of an optical fibre grating, comprising: firstly, spraying an optical fibre core (1) with a plurality of annular or semi-annular hard embedding bodies (4) at intervals, and coating the optical fibre core (1) and the hard embedding bodies (4) with an optical fibre coating (2); and finally, extruding and curing the optical fibre coating (2) to produce a radial inward extruding force, so that the density of the optical fibre core (1) changes in an alternate manner along the axial direction of the optical fibre core (1);
the density of the optical fibre core (1) of the part wrapped by the hard embedding bodies (4) is higher than the density of the optical fibre core (1) of the other part which is not wrapped by the hard embedding bodies (4);
wherein the optical fibre grating comprises the optical fibre core (1) and an optical fibre coating (2) in sequence from inside to outside, wherein the optical fibre core (1) comprises a plurality of high-density segments and a plurality of low-density segments; the high-density segments and the low-density segments are arranged in an alternate manner along the axial direction of the optical fibre core (1);
plurality of hard embedding bodies (4) are arranged between the optical fibre core (1) and the optical fibre coating (2); the optical fibre core (1) is wrapped by the hard embedding bodies (4) in an annular manner; the plurality of hard embedding bodies (4) are arranged at intervals along the axis direction of the optical fibre core (1).

## Patentansprüche

1. Herstellungsverfahren für ein optisches Fasergitter, wobei das Verfahren folgende Schritte beinhaltet:
zuerst Beschichten eines optischen Faserkerns (1) mit einer optischen Faserbeschichtung (2), und Aushärten der optischen Faserbeschichtung (2); anschließendes, in Intervallen erfolgendes, Besprühen der optischen Faserbeschichtung (2) mit einer Mehrzahl von ringförmigen oder halbringförmigen harten Einbettungskörpern (4), und Beschichten der optischen Faserbeschichtung (2) und der harten Einbettungskörper (4) mit einer optischen Fasereinfärbungsschicht (3); und abschließendes Extrudieren und Aushärten der optischen Fasereinfärbungsschicht (3) zum Erzeugen einer radial einwärts gerichteten Extrudierkraft, so dass sich die Dichte des optischen Faserkerns (1) entlang der axialen Richtung des optischen Faserkerns (1) alternierend verändert;
wobei die Dichte des optischen Faserkerns (1) von dem Teil, welcher von den harten Einbettungskörpern (4) umhüllt ist, höher ist als die Dichte des optischen Faserkerns (1) von dem anderen Teil, welcher nicht durch die harten Einbettungskörper (4) umhüllt ist;
wobei das optische Fasergitter den optischen Faserkern (1), eine optische Faserbeschichtung (2) und eine optische Fasereinfärbungsschicht (3) in einer von innen nach außen verlaufenden Abfolge aufweist,
wobei der optische Faserkern (1) eine Mehrzahl von Segmenten hoher Dichte und eine Mehrzahl von Segmenten niedriger Dichte aufweist, wobei die Segmente hoher Dichte und die Segmente geringer Dichte entlang der axialen Richtung des optischen Faserkerns (1) alternierend angeordnet sind; die Mehrzahl von harten Einbettungskörpern (4) zwischen der optischen Faserbeschichtung (2) und der optischen Fasereinfärbungsschicht (3) angeordnet sind; die optische Faserbeschichtung (2) und der optische Faserkern (1) von den harten Einbettungskörpern ringförmig umhüllt sind; wobei die Mehrzahl von harten Einbettungskörpern (4) entlang der axialen Richtung des optischen Faserkerns (1) in Intervallen angeordnet sind.

2. Herstellungsverfahren für ein optisches Fasergitter nach Anspruch 1, wobei die harten Einbettungskörper (4) entlang der axialen Richtung des optischen Faserkerns (1) in gleichmäßigen Intervallen angeordnet sind.

3. Herstellungsverfahren für ein optisches Fasergitter, wobei das Verfahren folgende Schritte beinhaltet:
zuerst, in Intervallen erfolgendes Besprühen eines optischen Faserkerns (1) mit einer Mehrzahl von ringförmigen oder halbringförmigen harten Einbettungskörpern (4), und Beschichten des optischen Faserkerns (1) und der harten Einbettungskörper (4) mit einer optischen Faserbeschichtung (3); und abschließendes Extrudieren und Aushärten der optischen Faserbeschichtung (2) zum Erzeugen einer radial einwärts gerichteten Extrudierkraft, so dass sich die Dichte des optischen Faserkerns (1) entlang der axialen Richtung des optischen Faserkerns (1) alternierend verändert;
wobei die Dichte des optischen Faserkerns (1) von dem Teil, welcher von den harten Einbettungskörpern (4) umhüllt ist, höher ist als die Dichte des optischen Faserkerns (1) von dem anderen Teil, welcher nicht durch die harten Einbettungskörper (4) umhüllt ist;
wobei das optische Fasergitter den optischen Faserkern (1) und eine optische Faserbeschichtung (2) in einer von innen nach außen verlaufenden Abfolge aufweist,
wobei der optische Faserkern (1) eine Mehrzahl von Segmenten hoher Dichte und eine Mehrzahl von Segmenten niedriger Dichte aufweist, wobei die Segmente hoher Dichte und die Segmente niedriger Dichte entlang der axialen Richtung des optischen Faserkerns (1) alternierend angeordnet sind; die Mehrzahl von harten Einbettungskörpern (4) zwischen dem optischen Faserkern (1) und der optischen Faserbeschichtung (2) angeordnet ist; der optische Faserkern (1) von den harten Einbettungskörpern (4) ringförmig umhüllt ist; wobei die Mehrzahl von harten Einbettungskörpern (4) entlang der axialen Richtung des optischen Faserkerns (1) in Intervallen angeordnet ist.

## Revendications

1. Procédé de fabrication d'un réseau de fibres optiques, consistant à :
tout d'abord, revêtir un coeur de fibre optique (1) avec un revêtement de fibre optique (2), et faire durcir le revêtement de fibre optique (2) ;
puis, pulvériser le revêtement de fibre optique (2) avec une pluralité de corps d'enrobage dur annulaires ou semi-annulaires (4) à des intervalles, et revêtir le revêtement de fibre optique (2) et les corps d'enrobage dur (4) avec une couche de coloration de fibre optique (3) ; et
enfin, extruder et faire durcir la couche de coloration de fibre optique (3) pour générer une force d'extrusion dirigée radialement vers l'intérieur, de sorte que la densité du coeur de fibre optique (1) change de manière alternée le long de la direction axiale du coeur de fibre optique (1) ;
la densité du coeur de fibre optique (1) de la partie enveloppée par les corps d'enrobage dur (4) étant supérieure à la densité du cœur de fibre optique (1) de l'autre partie qui n'est pas enveloppée par les corps d'enrobage dur (4) ;
dans lequel
le réseau de fibres optiques comprend le cœur de fibre optique (1), un revêtement de fibre optique (2) et une couche de coloration de fibre optique (3) dans l'ordre allant de l'intérieur vers l'extérieur ;
le cœur de fibre optique (1) comprend une pluralité de segments à haute densité et une pluralité de segments à faible densité ;
les segments à haute densité et les segments à faible densité sont disposés de manière alternée le long de la direction axiale du cœur de fibre optique (1) ;
la pluralité de corps d'enrobage dur (4) sont disposés entre le revêtement de fibre optique (2) et la couche de coloration de fibre optique (3) ;
le revêtement de fibre optique (2) et le cœur de fibre optique (1) sont enveloppés par les corps d'enrobage dur (4) de manière annulaire ;
la pluralité de corps d'enrobage dur (4) sont disposés à des intervalles le long de la direction de l'axe du cœur de fibre optique (1).

2. Procédé de fabrication d'un réseau de fibres optiques selon la revendication 1,
dans lequel les corps d'enrobage dur (4) sont disposés à des intervalles de manière uniforme le long de la direction de l'axe du cœur de fibre optique (1).

3. Procédé de fabrication d'un réseau de fibres optiques, consistant à :
tout d'abord, pulvériser un cœur de fibre optique (1) avec une pluralité de corps d'enrobage dur (4) annulaires ou semi-annulaires à des intervalles, et revêtir le cœur de fibre optique (1) et les corps d'enrobage dur (4) avec un revêtement de fibre optique (2) ; et
enfin, extruder et faire durcir le revêtement de fibre optique (2) pour générer une force d'extrusion dirigée radialement vers l'intérieur, de sorte que la densité du cœur de fibre optique (1) change de manière alternée le long de la direction axiale du cœur de fibre optique (1) ;
la densité du cœur de fibre optique (1) de la partie enveloppée par les corps d'enrobage dur (4) étant supérieure à la densité du cœur de fibre optique (1) de l'autre partie qui n'est pas enveloppée par les corps d'enrobage dur (4) ;
dans lequel
le réseau de fibres optiques comprend le cœur de fibre optique (1) et un revêtement de fibre optique (2) dans l'ordre allant de l'intérieur vers l'extérieur ;
le cœur de fibre optique (1) comprend une pluralité de segments à haute densité et une pluralité de segments à faible densité ;
les segments à haute densité et les segments à faible densité sont disposés de manière alternée le long de la direction axiale du cœur de fibre optique (1) ;
la pluralité de corps d'enrobage dur (4) sont disposés entre le cœur de fibre optique (1) et le revêtement de fibre optique (2) ;
le cœur de fibre optique (1) est enveloppé par les corps d'enrobage dur (4) de manière annulaire ;
la pluralité de corps d'enrobage dur (4) sont disposés à des intervalles le long de la direction de l'axe du cœur de fibre optique (1).
